# EUROPÄISCHE PATENTSCHRIFT

(11) **EP 1 900 708 B1**
(45) Veröffentlichungstag und Bekanntmachung des Hinweises auf die Patenterteilung: **22.02.2012**
(21) Anmeldenummer: 07016307.6
(22) Anmeldetag: 20.08.2007
(51) Int. Cl.: C04B 35/488, C23C 4/02, C23C 28/00, C04B 35/48, C23C 4/10, C04B 41/52, F16L 59/00

(54) **Wärmedämmstoff mit hoher zyklischer Temperaturbelastbarkeit**
Heat insulation material with high cyclical temperature rating
Matériau calorifuge doté d'une résistance à la température cyclique élevée

(30) Priorität: 29.08.2006 DE 102006040360
(43) Veröffentlichungstag der Anmeldung: 19.03.2008
(73) Patentinhaber: FNE Forschungsinstitut für Nichteisen-Metalle Freiberg GmbH, 09599 Freiberg (DE)
(72) Erfinder: Pachschwöll, Heino, 34477 Twistetal (DE); Klose, Joachim, 09569 Oederan (DE); Rothe, Christiane, 09603 Obergruna (DE); Jonas, Stefan, 09599 Freiberg (DE); Stolte, Thomas, 09599 Freiberg (DE)
(74) Vertreter: Hübner, Gerd

(56) Entgegenhaltungen:
- WO-A-99/23271
- WO-A-99/43861
- WO-A-2007/107388
- SCHMITZ G J ET AL: "Synthesis of polycrystalline BaZrO3 coatings" MATERIALS SCIENCE AND ENGINEERING B, ELSEVIER SEQUOIA, LAUSANNE, CH, Bd. 53, Nr. 1-2, 1. Mai 1998 (1998-05-01), Seiten 115-118, XP004140003 ISSN: 0921-5107
- DATABASE INSPEC [Online] THE INSTITUTION OF ELECTRICAL ENGINEERS, STEVENAGE, GB; August 2000 (2000-08), VASSEN R ET AL: "Zirconates as new materials for thermal barrier coatings" XP002459260 Database accession no. 6706562 & Journal of the American Ceramic Society American Ceramic Soc USA, Bd. 83, Nr. 8, August 2000 (2000-08), Seiten 2023-2028, ISSN: 0002-7820

## Beschreibung

Die vorliegende Erfindung betrifft einen Wärmedämmstoff auf Basis von Keramik sowie ein Verfahren zur Beschichtung eines Substrats mit einem solchen Wärmedämmstoff.

Keramische Wärmedämmstoffe eignen sich insbesondere für den Hochtemperatureinsatz und werden daher beispielsweise in Gasturbinen-Bauteilen, wie Brennkammerelementen und Turbinenschaufeln, oder in Motorenzylindern eingesetzt. Aufgabe der Wärmedämmstoffe ist es, die damit beschichteten Substrate vor zu hoher Temperatur zu schützen. Dies ist beispielsweise bei Innenwänden von Motorenzylindern notwendig, die beim Betrieb wegen des Bestrebens zur Erhöhung des Wirkungsgrades und dadurch zur Senkung des spezifischen Kraftstoffverbrauches des Motors immer höheren Temperaturen ausgesetzt werden, welche trotz gezielter Kühlung und spezifischer Bauweise der Bauteile oftmals die Einsatzgrenzen der Basis-Werkstoffe erreichen oder überschreiten.

Üblicherweise umfassen die Wärmedämmstoffe eine Funktionsschicht aus keramischem Material, bspw. aus Y₂O₃-dotiertem ZrO₂. Aufgrund der großen Porosität und des großen Diffusionskoeffizienten für Sauerstoff schützt die Funktionsschicht jedoch das Substratmaterial oftmals nicht oder zumindest nicht ausreichend gegen Oxidation und Heißgaskorrosion. Außerdem ist die Haftung der Y₂O₃-dotierten ZrO₂-Schicht auf dem Substrat, beispielsweise einem Turbinenschaufel-Grundwerkstoff, nicht ausreichend. Aus diesem Grund umfassen die bekannten Wärmedämmstoffe üblicherweise eine unterhalb der Funktionsschicht angeordnete Haftvermittlerschicht, welche u.a. die erforderliche Haftung der Funktionsschicht auf dem Substrat gewährleisten soll.

Allerdings kommt es bei den bekannten Schichtsystemen bedingt durch unterschiedliche Wärmeausdehnungskoeffizienten, unzureichende Phasenstabilität, das Wachstum und das Verhalten der thermisch gewachsenen Oxidschicht auf der Haftschicht, einer unzureichenden Oxidations- und Heißgaskorrosionsbeständigkeit und weiterer Einflussfaktoren insbesondere unter thermisch stark wechselnden Einsatzbedingungen, d.h. unter Einsatzbedingungen, bei denen sich hohe und niedrige Temperaturen periodisch abwechseln, zum Versagen der Schichtsysteme. Je nach Belastungsart gibt es unterschiedliche Versagensarten. Zwei wichtige Ausfallmechanismen sind das Versagen in der Keramik bei hohen Temperaturen und das Abplatzen von Teilen der Wärmedämmschicht bei eher niedrigen Belastungstemperaturen. Für das Versagen in der Keramik spielen das Sinterverhalten und die Phasenstabilität eine wichtige Rolle. Der Versagensmechanismus bei den eher niedrigen Temperaturen ist eng mit dem Aufwachsen der Oxidschicht (TGO) auf der Haftvermittlerschicht verbunden.

Aus der DE 198 01 424 A1 beispielsweise ist ein insbesondere bei Temperaturen von mehr als 1.000°C einsetzbarer Wärmedämmstoff bekannt, der aus einer im Wesentlichen aus BaZrO₃ und/oder La₂Zr₂O₇ und/oder SrZrO₃ bestehenden Deckschicht und einer darunter angeordneten Zwischenschicht bzw. Haftvermittlerschicht aus einer MeCrAlY-Legierung, worin Me = Ni oder Co ist, besteht.

Die ältere, jedoch nachveröffentlichte WO 2007 / 107388A2 offenbart bezüglich der Problematik des Versagens der Deckschicht ein Zweischicht - System mit einer unteren Yttriumoxid -dotierten Zirkonoxid-Schicht und einer oberen BaZrO₃-Schicht.

In der DE 101 58 639 A1 wird eine Wärmedämmschicht auf Basis von La₂Zr₂O₇, in dem 10 bis 90% des Lanthans durch Neodym, Dysprosium, Samarium oder Europium ersetzt ist, offenbart, welche durch Plasmaspritzen auf einer auf einem Substrat aufgebrachten Haftvermittlerschicht aus MeCrAlY aufgebracht wird.

Allerdings sind auch die beiden vorgenannten Wärmedämmstoffe hinsichtlich deren Wärmedämmung, insbesondere bei thermisch stark wechselnden Einsatzbedingungen bzw. zyklischer Temperaturbelastung, verbesserungsbedürftig.

Aufgabe der vorliegenden Erfindung ist es, einen Wärmedämmstoff bereitzustellen, der sich insbesondere auch bei einer zyklischen Temperaturbelastung, d.h. bei Einsatzbedingungen, bei denen sich hohe und niedrige Temperaturen periodisch abwechseln, durch eine ausgezeichnete Wärmedämmung auszeichnet.

Erfindungsgemäß wird diese Aufgabe durch einen Wärmedämmstoff gemäß Patentanspruch 1 und insbesondere durch einen Wärmedämmstoff auf Basis von Keramik, welcher eine BaZrO₃ und Y₂O₃-dotiertes ZrO₂ enthaltende Deckschicht umfasst, gelöst.

Überraschenderweise konnte im Rahmen der vorliegenden Erfindung herausgefunden werden, dass ein, eine BaZrO₃ und Y₂O₃-dotiertes ZrO₂ enthaltende Deckschicht umfassender Wärmedämmstoff nicht nur eine hervorragende Hochtemperaturbeständigkeit aufweist, sondern insbesondere auch eine hohe Belastbarkeit gegenüber stark und schnell wechselnden Temperaturen. Aus diesem Grund ist der erfindungsgemäße Wärmedämmstoff insbesondere als wärmedämmende Beschichtung von während ihres Betriebs zyklischen Temperaturbelastungen ausgesetzten Substraten, wie beispielsweise Böden von Motorenkolben oder Oberflächenmaterial von Turbinenschaufeln in einer Gasturbine, einsetzbar.

Besonders gute Ergebnisse hinsichtlich der Wärmedämmwirkung und der zyklischen Temperaturbelastbarkeit werden insbesondere erhalten, wenn die Deckschicht des erfindungsgemäßen Wärmedämmstoffes aus BaZrO₃ und Y₂O₃-dotiertem ZrO₂ besteht.

Grundsätzlich können die beiden vorgenannten Verbindungen in der Deckschicht in jedem beliebigen relativen Verhältnis zueinander enthalten sein. Vorzugsweise enthält die Deckschicht 10 bis 50 Gew.-% BaZr03 und 50 bis 90 Gew.-% Y₂O₃-dotiertes ZrO₂, besonders bevorzugt 10 bis 30 Gew.-% BaZrO₃ und 70 bis 90 Gew.-% Y₂O₃-dotiertes ZrO₂ und ganz besonders bevorzugt 15 bis 25 Gew.-% BaZrO₃ und 75 bis 85 Gew.-% Y₂O₃-dotiertes ZrO₂.

Gemäß einer weiteren bevorzugten Ausführungsform der vorliegenden Erfindung besteht die Deckschicht des erfindungsgemäßen Wärmedämmstoffes aus 10 bis 50 Gew.-% BaZrO₃ und 50 bis 90 Gew.-% Y₂O₃-dotiertem Zr02, besonders bevorzugt aus 10 bis 30 Gew.-% BaZrO₃ und 70 bis 90 Gew.-% Y₂O₃-dotiertem ZrO₂ und ganz besonders bevorzugt aus 15 bis 25 Gew.-% BaZrO₃ und 75 bis 85 Gew.-% Y₂O₃-dotiertem ZrO₂.

Ganz besonders gute Ergebnisse werden erhalten, wenn die Deckschicht aus 20 Gew.-% BaZrO₃ und 80 Gew.-% Y₂O₃-dotiertem ZrO₂ besteht.

Um eine gute Haftung der Deckschicht auf dem Substrat zu erreichen, wird in Weiterbildung des Erfindungsgedankens vorgeschlagen, dass der Wärmedämmstoff neben einer Deckschicht wenigstens eine Haftvermittlerschicht und bevorzugt genau eine Haftvermittlerschicht, aufweist. Ferner kann zwischen der wenigstens einen Haftvermittlerschicht und der Deckschicht auch wenigstens eine Zwischenschicht angeordnet sein, welche beispielsweise zur Erhöhung der Korrosionsbeständigkeit des Wärmedämmstoffes dienen kann.

In Weiterbildung des Erfindungsgedankens wird vorgeschlagen, die wenigstens eine Haftvermittlerschicht aus einem MeCrAlY, worin Me Nickel und/oder Cobalt ist, enthaltenden Material vorzusehen. Besonders gute Ergebnisse werden bei dieser Ausführungsform erhalten, wenn die wenigstens eine Haftvermittlerschicht aus MeCrAlY, worin Me Nickel und/oder Cobalt ist, besteht.

Sofern der Wärmedämmstoff eine Zwischenschicht umfasst, enthält diese vorzugsweise Y₂O₃-dotiertes ZrO₂, wobei die Zwischenschicht besonders bevorzugt aus Y₂O₃-dotiertem ZrO₂ besteht.

Gemäß einer weiteren bevorzugten Ausführungsform der vorliegenden Erfindung besteht der erfindungsgemäße Wärmedämmstoff aus wenigstens einer Haftvermittlerschicht, wenigstens einer darauf angeordneten Zwischenschicht und einer darauf angeordneten Deckschicht, wobei die Haftvermittlerschicht aus MeCrAlY, worin Me = Ni und/oder Co ist, besteht, die Zwischenschicht aus Y₂O₃-dotiertem ZrO₂ besteht und die Deckschicht aus 15 bis 25 Gew.-% BaZrO₃ und 75 bis 85 Gew.-% Y₂O₃-dotiertem ZrO₂ besteht.

Ein weiterer Gegenstand der vorliegenden Erfindung ist ein Verfahren zur Beschichtung eines Substrats mit dem erfindungsgemäßen Wärmedämmstoff, umfassend den Schritt des Aufbringens einer wie zuvor zusammengesetzten Deckschicht auf ein ggf. beschichtetes Substrat durch ein thermisches Spritzverfahren oder ein Elektronenstrahlverfahren, insbesondere ein EB-PVD (electron beam physical vapour deposition)-Verfahren.

Zum Aufbringen der Deckschicht auf das ggf. beschichtete Substrat können alle dem Fachmann bekannten thermischen Spritzverfahren und Elektronenstrahlverfahren, insbesondere EB-PVD-Verfahren, eingesetzt werden, wobei sich für diesen Zweck insbesondere das Aufbringen der Deckschicht durch Hochgeschwindigkeitsflammspritzen oder Plasmaspritzen als besonders geeignet erwiesen hat. Besonders bevorzugt erfolgt das Aufbringen der Deckschicht auf das ggf. beschichtete Substrat durch Plasmaspritzen, wie dies an sich aus der WO 99/43861 A1 bekannt ist.

Zur Herstellung der Deckschicht, d.h. der Mischung aus BaZrO₃ und Y₂O₃-dotiertem ZrO₂ können alle dem Fachmann zu diesem Zweck bekannten Verfahren, insbesondere Pulververfahren, herangezogen. Vorzugsweise erfolgt die Herstellung der Deckschicht durch Vermischen von pulverförmigem BaZrO₃ und pulverförmigem, Y₂O₃-dotiertem ZrO₂ und Aufbringen des so erhaltenen Pulvergemischs durch ein thermisches Spritzverfahren oder ein Elektronenstrahlverfahren, insbesondere ein EB-PVD-Verfahren, auf das ggf. beschichtete Substrat.

In Weiterbildung des Erfindungsgedankens wird vorgeschlagen, zum Herstellen des vorstehenden Pulvergemischs BaZrO₃ mit einer Korngröße zwischen 1 und 2 µm und/oder Y₂O₃-dotiertes ZrO₂ mit einer Korngröße zwischen 5 und 25 µm einzusetzen.

Um eine gute Spritzbarkeit und wirksame Verteilung des BaZrO₃ bei der Herstellung der Pulvermischung zu erreichen, wird das BaZrO₃ vor dem Vermischen mit dem Y₂O₃-dotierten ZrO₂ vorzugsweise unter Verwendung eines Bindehilfsmittels zu einem Presskörper gepresst und zu einer festen Keramik gesintert, bevor die so erhaltene Keramik beispielsweise mittels eines Backenbrechers und/oder einer Kugelmühle zu einem Pulver mit einer Korngröße zwischen 10 und 125 µm aufbereitet wird.

Grundsätzlich ist der erfindungsgemäße Wärmedämmstoff für die Beschichtung aller Substrate und insbesondere aller Hochtemperaturanwendungen ausgesetzter Substrate geeignet. Lediglich beispielsweise seien Al-Kolbenlegierungen und Ni-Basis-Superlegierungen als geeignete Substratmaterialien genannt.

Um eine gute Haftung der Deckschicht auf dem Substrat zu gewährleisten, wird bei dem erfindungsgemäßen Verfahren vorzugsweise zunächst das Substrat mit einer Haftvermittlerschicht und ggf. einer Zwischenschicht beschichtet, bevor darauf die Deckschicht aufgebracht wird. Dabei besteht die Haftvermittlerschicht bevorzugt aus MeCrAlY, worin Me Nickel und/oder Cobalt ist.

Sofern zwischen der Haftvermittlerschicht und der Deckschicht eine Zwischenschicht angeordnet wird, besteht diese vorzugsweise aus Y₂O₃-dotiertem ZrO₂.

In Weiterbildung des Erfindungsgedankens wird vorgeschlagen, auch die Haftvermittlerschicht und/oder die Zwischenschicht durch ein thermisches Spritzverfahren oder ein Elektronenstrahlverfahren, insbesondere ein EB-PVD-Verfahren, und besonders bevorzugt durch Plasmaspritzen auf das Substrat aufzubringen.

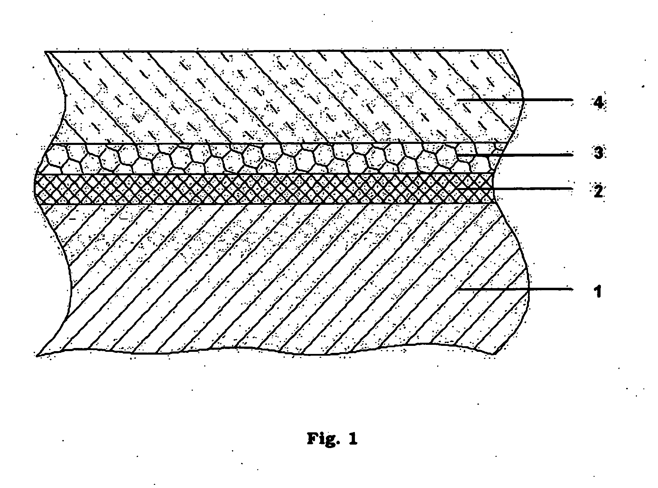

Nachfolgend wird die vorliegende Erfindung rein beispielhaft anhand vorteilhafter Ausführungsformen und unter Bezugnahme auf die beigefügte Zeichnung beschrieben.

Die Figur zeigt einen schematischen Querschnitt eines mit dem erfindungsgemäßen Wärmedämmstoff beschichteten Substrats.

Der in der Figur dargestellte Aufbau besteht aus einem, beispielsweise aus einer Aluminiumkolbenlegierung oder einer Ni-Basis-Superlegierung bestehenden, Substrat 1, auf dessen Oberfläche eine Haftvermittlerschicht 2 zum Verbessern der Haftung zwischen dem Substrat und den über dem Haftvermittler angeordneten Schichten aufgebracht ist. Über dem Haftvermittler ist eine Zwischenschicht 3 angeordnet, welche beispielsweise die Korrosionseigenschaften des Wärmedämmstoffes verbessert. Schließlich befindet sich auf der Zwischenschicht 3 eine Deckschicht 4.

Nachfolgend wird die vorliegende Erfindung anhand eines den Erfindungsgedanken veranschaulichenden, die vorliegende Erfindung jedoch nicht beschränkenden Beispiels erläutert.

### BEISPIEL

Zur Herstellung eines wie schematisch in der Figur gezeigt, zusammengesetzten Wärmedämmstoffes wurde auf einer Ni-Basis-Superlegierung durch atmosphärisches Plasmaspritzen von Pulver Amperit 410.1 unter Verwendung von Wasserstoff und Argon als Prozessgas eine 50 µm dicke MeCrAlY-Schicht aufgespritzt. Das Ni-Substrat wurde unmittelbar vor der Beschichtung vorzugsweise auf ca. 200°C vorgewärmt.

Sofort nach dem Auftrag der MeCrAlY-Haftvermittlerschicht erfolgte das Aufspritzen einer Y₂O₃-dotierten ZrO₂-Zwischenschicht mit einer Dicke von 50 µm unter Verwendung von spezifischem Spritzpulver Abler 4023.0 mit einer Korngröße von 5 bis 25 µm. Die Zwischenschicht wurde ebenfalls durch atmosphärisches Plasmaspritzen unter Verwendung von Wasserstoff und Argon als Trägergas aufgebracht.

Unmittelbar nach dem Auftrag der Zwischenschicht wurde ein Gemisch aus 20% BaZrO₃ und 80% Y₂O₃-dotiertem ZrO₂ wiederum durch atmosphärisches Plasmaspritzen unter Verwendung von Wasserstoff und Argon als Prozessgas aufgespritzt. Diese funktionale Deckschicht hatte eine Dicke von 150 µm. Zur Herstellung des Pulvergemisches wurden als Ausgangspulver Abler 4023.0 (Y₂O₃-dotiertes ZrO₂) mit einer Korngröße von 5 bis 25 µm und Alfa Aesar 12009-21-1 (BaZrO₃) mit einer Korngröße von 1 bis 2 µm verwendet.

Um eine gute Spritzbarkeit und wirksame Verteilung des BaZrO₃ zu erreichen, wurde das BaZrO₃ vor dem Mischen aufbereitet. Dazu wurde das Alfa Aesar-Pulver unter Verwendung eines Bindehilfsmittels zu Presskörpern gepresst und zu einer festen Keramik in einem Stufenprozess gesintert. Diese Keramikkörper wurden mittels Backenbrecher und Kugelmühle zu Spritzpulver mit einer Korngröße von 10 bis 125 µm aufbereitet. Die beschichteten Probekörper wurden sowohl einer zyklischen Temperaturbelastung (7 Sek. Flamme + 7 Sek. CO₂-Kühlung und 7 Sek. Flamme + 7 Sek. Pressluftkühlung) als auch einer den zyklischen Langzeittemperaturbedingungen der Kolbenbelastung simulierenden Prüfung unterworfen. Nach 500 Zyklen (Flamme + CO₂) und 500 Zyklen (Flamme + Pressluft) bzw. 1960 Zyklen der simulierten Langzeitprüfung war das Schichtsystem noch völlig intakt.

### Bezugszeichenliste:

- 1: Substrat
- 2: Haftvermittlerschicht
- 3: Zwischenschicht
- 4: Deckschicht

## Patentansprüche

1. Wärmedämmstoff auf Basis von Keramik,
**dadurch gekennzeichnet, dass**
dieser eine BaZrO₃ und Y₂O₃-dotiertes ZrO₂ in Mischung enthaltende Deckschicht (4) umfasst.

2. Wärmedämmstoff nach Anspruch 1,
**dadurch gekennzeichnet, dass**
die Deckschicht (4) aus einer Mischung von BaZrO₃ und Y₂O₃-dotiertem ZrO₂ besteht.

3. Wärmedämmstoff nach Anspruch 1 oder 2,
**dadurch gekennzeichnet, dass**
die Deckschicht (4) 10 bis 50 Gew.-% BaZrO₃ und 50 bis 90 Gew.-% Y₂O₃-dotiertes ZrO₂, bevorzugt 10 bis 30 Gew.-% BaZrO₃ und 70 bis 90 Gew.-% Y₂O₃-dotiertes ZrO₂ und besonders bevorzugt 15 bis 25 Gew.-% BaZrO₃ und 75 bis 85 Gew.-% Y₂O₃-dotiertes ZrO₂ enthält oder daraus besteht.

4. Wärmedämmstoff nach zumindest einem der vorstehenden Ansprüche,
**dadurch gekennzeichnet, dass**
die Deckschicht (4) aus 20 Gew.-% BaZrO₃ und 80 Gew.-% Y₂O₃-dotiertem ZrO₂ besteht.

5. Wärmedämmstoff nach zumindest einem der vorstehenden Ansprüche,
**dadurch gekennzeichnet, dass**
dieser wenigstens eine Haftvermittlerschicht (2) und ggf. wenigstens eine zwischen der Haftvermittlerschicht (2) und der Deckschicht (4) angeordnete Zwischenschicht (3) aufweist.

6. Wärmedämmstoff nach Anspruch 5,
**dadurch gekennzeichnet, dass**
die wenigstens eine Haftvermittlerschicht (2) MeCrAlY, worin Me Nickel und/oder Cobalt ist, enthält.

7. Wärmedämmstoff nach Anspruch 6,
**dadurch gekennzeichnet, dass**
die wenigstens eine Haftvermittlerschicht (2) aus MeCrAlY, worin Me Nickel und/oder Cobalt ist, besteht.

8. Wärmedämmstoff nach Anspruch 5,
**dadurch gekennzeichnet, dass**
die wenigstens eine Zwischenschicht (3) Y₂O₃-dotiertes ZrO₂ enthält.

9. Wärmedämmstoff nach Anspruch 8,
**dadurch gekennzeichnet, dass**
die wenigstens eine Zwischenschicht (3) aus Y₂O₃-dotiertem ZrO₂ besteht.

10. Wärmedämmstoff bestehend aus wenigstens einer Haftvermittlerschicht (2), wenigstens einer darauf angeordneten Zwischenschicht (3) und einer darauf angeordneten Deckschicht (4), wobei die Haftvermittlerschicht (2) aus MeCrAlY, worin Me Nickel und/oder Cobalt ist, besteht, die Zwischenschicht (3) aus Y₂O₃-dotiertem ZrO₂ besteht und die Deckschicht (4) aus 15 bis 25 Gew.-% BaZrO₃ und 75 bis 85 Gew.-% Y₂O₃-dotiertem ZrO₂ besteht.

11. Verfahren zur Beschichtung eines Substrats (1) mit einem Wärmedämmstoff nach zumindest einem der Ansprüche 1 bis 10, umfassend den Schritt des Aufbringens einer Deckschicht (4) beinhaltend BaZrO₃ und Y₂O₃-dotiertes ZrO₂ in Mischung auf ein ggf. beschichtetes Substrat (1) durch ein thermisches Spritzverfahren oder ein Elektronenstrahlverfahren.

12. Verfahren nach Anspruch 11,
**dadurch gekennzeichnet, dass**
die Deckschicht (4) durch Hochgeschwindigkeitsflammspritzen oder Plasmaspritzen, bevorzugt durch Plasmaspritzen, auf das ggf. beschichtete Substrat (1) aufgebracht wird.

13. Verfahren nach Anspruch 11 oder 12,
**dadurch gekennzeichnet, dass**
vor dem Aufbringen der Deckschicht (4) pulverförmiges BaZrO₃ und pulverförmiges Y₂O₃-dotiertes ZrO₂ miteinander vermischt werden und dieses Pulvergemisch durch ein thermisches Spritzverfahren oder ein Elektronenstrahlverfahren auf das ggf. beschichtete Substrat (1) aufgebracht wird.

14. Verfahren nach Anspruch 13,
**dadurch gekennzeichnet, dass**
zum Herstellen des Pulvergemischs BaZrO₃ mit einer Korngröße zwischen 1 und 2 µm und/oder Y₂O₃-dotiertes ZrO₂ mit einer Korngröße zwischen 5 und 25 µm eingesetzt wird.

15. Verfahren nach Anspruch 13 oder 14,
**dadurch gekennzeichnet, dass**
das BaZrO₃ vor dem Vermischen mit dem Y₂O₃-dotierten ZrO₂ unter Verwendung eines Bindehilfsmittels zu einem Presskörper gepresst und zu einer festen Keramik gesintert wird, bevor die so erhaltene Keramik mittels eines Backenbrechers und einer Kugelmühle zu einem Pulver mit einer Korngröße zwischen 10 und 125 µm aufbereitet wird.

16. Verfahren nach zumindest einem der Ansprüche 11 bis 15,
**dadurch gekennzeichnet, dass**
das Substrat (1) eine Al-Kolbenlegierung oder eine Ni-Basis-Superlegierung ist.

17. Verfahren nach zumindest einem der Ansprüche 11 bis 16,
**dadurch gekennzeichnet, dass**
das Substrat (1) vor dem Aufbringen der Deckschicht (4) mit einer Haftvermittlerschicht (2) und ggf. einer darauf angeordneten Zwischenschicht (3) beschichtet wird.

18. Verfahren nach Anspruch 17,
**dadurch gekennzeichnet, dass**
die Haftvermittlerschicht (2) aus MeCrAlY, worin Me Nickel und/oder Cobalt ist, besteht.

19. Verfahren nach Anspruch 17 oder 18,
**dadurch gekennzeichnet, dass**
die Zwischenschicht (3) aus Y₂O₃-dotiertem ZrO₂ besteht.

20. Verfahren nach zumindest einem der Ansprüche 17 bis 19,
**dadurch gekennzeichnet, dass**
die Haftvermittlerschicht (2) und/oder die Zwischenschicht (3) durch ein thermisches Spritzverfahren oder ein Elektronenstrahlverfahren, bevorzugt durch Plasmaspritzen, auf das Substrat (1) aufgebracht wird/werden.

## Claims

1. Heat insulation material on the basis of ceramic material,
**characterized in that**
said heat insulation material comprises a BaZrO₃ and Y₂O₃ doped ZrO₂ in mixture.

2. Heat insulation material according to claim 1,
**characterized in that**
the top layer (4) consists of a mixture of BaZrO₃ and Y₂O₃ doped ZrO₂.

3. Heat insulation material according to claim 1 or 2,
**characterized in that**
the top layer (4) contains or consists of 10 to 50 % by weight BaZrO₃ and 50 to 90 % by weight Y₂O₃ doped ZrO₂, preferably of 10 to 30 % by weight BaZrO₃ and 70 to 90 % by weight Y₂O₃ doped ZrO₂ and more preferably of 15 to 25 % by weight BaZrO₃ and 75 to 85 % by weight Y₂O₃ doped ZrO₂.

4. Heat insulation material according to at least one of the preceding claims,
**characterized in that**
the top layer (4) consists of 20 % by weight BaZrO₃ and 80 % by weight Y₂O₃ doped ZrO₂.

5. Heat insulation material according to at least one of the preceding claims,
**characterized in that**
said heat insulation material has at least one adhesion promotion layer (2) and, optionally, at least one intermediate layer (3) arranged between the adhesion promotion layer (2) and the top layer (4).

6. Heat insulation material according to claim 5,
**characterized in that**
the at least one adhesion promotion layer (2) contains MeCrAlY, where Me is nickel and/or cobalt.

7. Heat insulation material according to claim 6,
**characterized in that**
the at least one adhesion promotion layer (2) consists of MeCrAlY, where Me is nickel and/or cobalt.

8. Heat insulation material according to claim 5,
**characterized in that**
the at least one intermediate layer (3) contains Y₂O₃ doped ZrO₂.

9. Heat insulation material according to claim 8,
**characterized in that**
the at least one intermediate layer (3) consists of Y₂O₃ doped ZrO₂.

10. Heat insulation material consisting of at least one adhesion promotion layer (2), at least one intermediate layer (3) arranged thereon and a top layer (4) arranged thereon, with the adhesion promotion layer (2) consisting of MeCrAlY, where Me is nickel and/or cobalt, the intermediate layer (3) consists of Y₂O₃ doped ZrO₂ and the top layer (4) consists of 15 to 25 % by weight BaZrO₃ and 75 to 85 % by weight Y₂O₃ doped ZrO₂.

11. Method for coating a substrate (1) with a heat insulation material including according to at least one of claims 1 to 10, comprising the step of applying a top layer (4) containing BaZrO₃ and Y₂O₃ doped ZrO₂ in mixture to an optionally coated substrate (1) by a thermal spray method or an electron beam method.

12. Method according to claim 11,
**characterized in that**
the top layer (4) is applied to the optionally coated substrate (1) by high velocity flame spraying or plasma spraying, preferably by plasma spraying.

13. Method according to claim 11 or 12,
**characterized in that**
BaZrO₃ in powder form and Y₂O₃ doped ZrO₂ in powder form are mixed with one another before the application of the top layer (4) and this powder mixture is applied to the optionally coated substrate (1) by a thermal spray method or an electron beam method.

14. Method according to claim 13,
**characterized in that**
BaZrO₃ with a grain size between 1 and 2 µm and/or Y₂O₃ doped ZrO₂ with a grain size between 5 and 25 µm is used to manufacture the powder mixture.

15. Method according to claim 13 or 14,
**characterized in that**
the BaZrO₃ is pressed to form a pressed body, using a bonding aid, and is sintered to form a solid ceramic material before the mixing with the Y₂O₃ doped ZrO₂ before the ceramic material obtained in this manner is prepared as a powder with a grain size between 10 and 125 µm by means of a jaw crusher and a ball mill.

16. Method according to at least one of claims 11 to 15,
**characterized in that**
the substrate (1) is an Al piston alloy or an Ni-based super alloy.

17. Method according to at least one of claims 11 to 16,
**characterized in that**
the substrate (1) is coated with an adhesion promotion layer (2), and optionally an intermediate layer (3) arranged thereon, before the application of the top layer (4).

18. Method according to claim 17,
**characterized in that**
the adhesion promotion layer (2) consists of MeCrAlY, where Me is nickel and/or cobalt.

19. Method according to claim 17 or 18,
**characterized in that** the intermediate layer (3) consists of Y₂O₃ doped ZrO₂.

20. Method according to at least one of claims 17 to 19,
**characterized in that**
the adhesion promotion layer (2) and/or the intermediate layer (3) is/are applied to the substrate (1) by a thermal spray method or an electronic beam method, preferably by plasma spraying.

## Revendications

1. Matériau calorifuge à base de céramique
**caractérisé en ce que**
celui-ci comprend une couche de revêtement (4) contenant du BaZrO₃ et du ZrO₂ doté d'Y₂O₃ en mélange.

2. Matériau calorifuge selon la revendication 1
**caractérisé en ce que**
la couche de revêtement (4) est constituée d'un mélange de BaZrO₃ et de ZrO₂ doté d'Y₂O₃.

3. Matériau calorifuge selon les revendications 1 ou 2
**caractérisé en ce que**
la couche de revêtement (4) contient ou est constituée de 10 à 50 % en poids de BaZrO₃ et de 50 à 90 % en poids de ZrO₂ doté de Y₂O₃, de préférence de 10 à 30 % en poids de BaZrO₃ et de 70 à 90 % en poids de ZrO₂ doté de Y₂O₃ et de manière particulièrement préférée de 15 à 25 % en poids de BaZrO₃ et de 75 à 85 % en poids de ZrO₂ doté de Y₂O₃.

4. Matériau calorifuge selon au moins l'une des revendications précédentes
**caractérisé en ce que**
la couche de revêtement (4) est constituée de 20 % en poids de BaZrO₃ et de 80 % en poids de ZrO₂ doté d'Y₂O₃.

5. Matériau calorifuge selon au moins l'une des revendications précédentes
**caractérisé en ce que**
celui-ci présente au moins une couche de promoteur d'adhérence (2) et éventuellement au moins une couche intermédiaire (3) disposée entre la couche de promoteur d'adhérence (2) et la couche de revêtement (4).

6. Matériau calorifuge selon la revendication 5
**caractérisé en ce**
**qu'**au moins une couche de promoteur d'adhérence (2) contienne du MeCrAlY où il y a du Me nickel et/ou du cobalt.

7. Matériau calorifuge selon la revendication 6
**caractérisé en ce que**
qu'au moins une couche de promoteur d'adhérence (2) est constituée de MeCrAlY où il y a du Me nickel et/ou du cobalt.

8. Matériau calorifuge selon la revendication 5
**caractérisé en ce**
**qu'**au moins une couche intermédiaire (3) contient du ZrO₂ doté d'Y₂O₃.

9. Matériau calorifuge selon la revendication 8
**caractérisé en ce que**
qu'au moins une couche intermédiaire (3) est constituée de ZrO₂ doté d'Y₂O₃.

10. Matériau calorifuge constitué d'au moins une couche de promoteur d'adhérence (2), d'au moins une couche intermédiaire (3) disposée au dessus et d'une couche de revêtement (4) disposée au dessus, la couche de promoteur d'adhérence (2) étant constituée de MECrAlY où il y a du Me nickel et/ou du cobalt, la couche intermédiaire (3) étant constituée de ZrO₂ doté de Y₂O₃ et la couche de revêtement (4) étant constituée de 15 à 25 % en poids de BaZrO₃ et de 75 à 85 % en poids de ZrO₂ doté de Y₂O₃.

11. Procédé pour le revêtement d'un substrat (1) comprenant un matériau calorifuge selon au moins l'une des revendications de 1 à 10 comprenant l'étape de l'apport d'une couche de revêtement (4) comprenant du BazrO₃ et du ZrO₂ doté de Y₂O₃ en mélange sur un substrat (1) éventuellement revêtu par un procédé de pulvérisation thermique ou par un procédé par faisceau électronique.

12. Procédé selon la revendication 11
**caractérisé en ce que**
la couche de revêtement (4) est déposée sur le substrat éventuellement revêtu (1) par une projection à la flamme à grande vitesse ou une projection par plasma, de préférence par projection par plasma.

13. Procédé selon les revendications 11 ou 12
**caractérisé en ce**
**qu'**avant l'apport de la couche de revêtement (4) du BaCrO₃ sous forme de poudre et du CrO₂ doté de Y₂O₃ sous forme de poudre sont mélangés et que ce mélange pulvérulent est appliqué sur le substrat (1) éventuellement revêtu par un procédé de pulvérisation thermique ou une procédé par faisceau électronique.

14. Procédé selon la revendication 13
**caractérisé en ce que**
pour la fabrication du mélange pulvérulent, du BaCrO₃ avec une taille de grains entre 1 et 2 µm et/ou du ZrO₂ doté d'Y₂O₃ avec une taille de grains entre 5 et 25 µm soient employés.

15. Procédé selon les revendications 13 ou 14
**caractérisé en ce que**
le BaCrO₃ est compressé dans un corps de compression moyennant l'emploi d'un produit auxiliaire liant avant le mélange avec le ZrO₂ doté de Y₂O₃ et est fritté sous la forme d'une céramique solide, avant que la céramique ainsi obtenue ne soit préparée en une poudre avec une taille de grains entre 10 et 125 µm au moyen broyeur à mâchoires et d'un moulin à billes.

16. Procédé selon au moins l'une des revendications de 11 à 15
**caractérisé en ce que**
le substrat (1) est un alliage Al de piston ou un superalliage à base de nickel.

17. Procédé selon au moins l'une des revendications de 11 à 16
**caractérisé en ce que**
le substrat (1) est revêtu avec une couche de promoteur d'adhérence (2) et éventuellement avec une couche intermédiaire (3) disposée dessus avant le dépôt de la couche de revêtement (4).

18. Procédé selon la revendication 17
**caractérisé en ce que**
la couche de promoteur d'adhérence (2) est constituée de MeCrAlY où il y a du Me nickel et/ou du cobalt.

19. Procédé selon les revendications 17 ou 18
**caractérisé en ce que**
la couche intermédiaire (3) est constituée de ZrO₂ doté d'Y₂O₃.

20. Procédé selon au moins l'une des revendications de 17 à 19
**caractérisé en ce que**
la couche de promoteur d'adhérence (2) et/ou la couche intermédiaire (3) est/sont appliquée(s) par un procédé de pulvérisation thermique ou par un procédé de faisceau électronique.
